# EUROPÄISCHE PATENTSCHRIFT

(11) **EP 3 564 101 B1**
(45) Veröffentlichungstag und Bekanntmachung des Hinweises auf die Patenterteilung: **10.11.2021**
(21) Anmeldenummer: 19180834.4
(22) Anmeldetag: 14.08.2017
(51) Int. Cl.: B62J 1/26, B62J 1/18

(54) **FAHRRADSATTEL**
BICYCLE SADDLE
SELLE DE BICYCLETTE

(30) Priorität: 30.08.2016 DE 102016216309; 03.02.2017 DE 102017201775
(43) Veröffentlichungstag der Anmeldung: 06.11.2019
(62) Teilanmeldung aus: 17751771.1
(73) Patentinhaber: Ergon International GmbH, 56070 Koblenz (DE)
(72) Erfinder: Arnold, Franc, 56068 Koblenz (DE); Krause, Andreas, 56068 Koblenz (DE)
(74) Vertreter: dompatent von Kreisler Selting Werner - Partnerschaft von Patent- und Rechtsanwälten mbB

(56) Entgegenhaltungen:
- DE-A1-102011 057 020
- US-A- 5 108 076
- US-A- 5 203 607
- US-A- 5 348 369

## Beschreibung

Die Erfindung betrifft einen Fahrradsattel sowie ein Sattelpolster. Ferner betrifft die Erfindung ein Verfahren zur Herstellung eines Fahrradsattels oder eines Sattelpolsters.

Fahrradsättel weisen eine Sattelschale auf, deren Unterseite üblicherweise mit einem Sattelgestell verbunden ist. Auf der Oberseite der Sattelschale ist ein Sattelpolster angeordnet. Üblicherweise sind Sattelpolster aus aufgeschäumtem Material wie PU-Schaum hergestellt. Die Sattelpolster sind auf die Oberseite der Sattelschale aufgeklebt. Derartige, insbesondere geschäumte Sattelpolster weisen gute Dämpfungseigenschaften auf. Allerdings kann insbesondere bei längeren Fahrten ein derartiges Zusammendrücken des Polsters erfolgen, dass insbesondere die Sitzknochen des Benutzers auf die Oberseite der Sattelschale drücken, so dass Druckstellen entstehen. Dies liegt darin begründet, dass der sogenannte Rebound derartiger Sattelpolster gering ist. Es ist daher bekannt, im Sitzbereich, d.h. im hinteren Bereich des Fahrradsattels, in dem die Sitzknochen des Benutzers angeordnet sind, Gelpolster vorzulegen. Derartige mit einem gelatine- oder gelartigen Material gefüllte Einlegeelemente werden in Ausnehmungen des Sattelpolsters eingelegt. Anschließend werden das Sattelpolster sowie die eingelegten Gelelemente mit einem Textilelement oder dergleichen überzogen. Derartige Gelelemente führen nur bedingt zu einer Verbesserung des Sitzkomforts, da durch die Gelelemente die auftretenden Kräfte nur besser verteilt werden.

Aus US 5 348 369, welche die Präambel des Anspruchs 1 zeigt, ist ein Fahrradsattel bekannt, der auf der Oberseite der Sattelschale ein erstes Polsterelement aufweist. Die Sattelschale weist Ausnehmungen auf, in denen weitere Polsterelemente angeordnet sin. Diese stehen auf der Unterseite der Sattelschale vor.

Aufgabe der Erfindung ist es, einen Fahrradsattel sowie ein Sattelpolster mit verbessertem Sitzkomfort zu schaffen.

Die Lösung der Aufgabe erfolgt durch einen Fahrradsattel gemäß Anspruch 1.

Ein Fahrradsattel weist eine üblicherweise aus hartem Kunststoff hergestellte Sattelschale auf. An der Unterseite der Sattelschale ist ein Sattelgestell angeordnet. Das Sattelgestell dient zur Verbindung mit dem Sattelstützrohr, wobei das Sattelgestell auch einstückig mit dem Stützrohr ausgebildet sein kann. Bei üblichen Sätteln handelt es sich bei dem Sattelgestell um ein aus Metallstreben hergestelltes Element, das sowohl mit einer in Fahrtrichtung nach vorne weisenden Sattelspitze als auch mit der Rückseite des Sattels verbunden ist. Auch andere Verbindungen zwischen der Sattelschale und dem Sattelgestell bzw. einem dem Sattelgestell entsprechenden Verbindungselement zum Sattelstützrohr sind bekannt. An der Oberseite der Sattelschale ist ein Sattelpolster angeordnet. Dies kann auf die Oberseite der Sattelschale aufgeklebt sein oder durch entsprechende Herstellungsverfahren direkt bereits während der Herstellung mit der Oberseite der Sattelschale verbunden werden.

Bei den erfindungsgemäßen Fahrradsätteln weist das Sattelpolster mindestens zwei Polsterelemente auf. Die Polsterelemente dienen insbesondere zum Dämpfen der beim Fahrradfahren auftretenden Bewegungen sowie zur möglichst komfortablen Unterstützung des Benutzers. Die Polsterelemente können hierbei auch aus unterschiedlichem Material hergestellt sein, wobei die entsprechenden Elemente insbesondere zur Dämpfung und Unterstützung dienen.

Bei einem ersten erfindungsgemäßen Fahrradsattel weist das Sattelpolster zumindest ein inneres Polsterelement und zumindest ein äußeres Polsterelement auf. Erfindungsgemäß ist das innere Polsterelement von dem äußeren Polsterelement zumindest teilweise umgeben. Bevorzugt ist es hierbei, dass das innere Polsterelement von dem äußeren Polsterelement durch Umspritzen oder Umschäumen umgeben ist. Hierdurch ist es insbesondere möglich, während der Herstellung des äußeren Polsterelements eine Verbindung zwischen dem äußeren und dem inneren Polsterelement herzustellen, da bei dem Umspritzungs- bzw. Umschäumungsprozess eine entsprechende Materialverbindung realisiert werden kann.

Besonders bevorzugt ist es, dass das innere Polsterelement derart angeordnet ist, dass es an der Oberseite der Sattelschale angeordnet ist. Das innere Polsterelement liegt somit vorzugsweise an der Oberseite der Sattelschale an oder berührt diese. Insbesondere ist das innere Polsterelement mit der Sattelschale verbunden, wobei eine Verbindung durch ein Verkleben, Verrasten oder anderweitiges Fixieren erfolgen kann. Erfindungsgemäß ist es somit bevorzugt, dass oberhalb des inneren Polsterelements zumindest teilweise ein äußeres Polsterelement angeordnet ist bzw. das äußere Polsterelement das innere Polsterelement auf der Oberseite insbesondere großteils umgibt. Es ist somit möglich, zwei unterschiedliche Materialien zu kombinieren. Dies erfolgt insbesondere im Sitzbereich. So kann das Material des äußeren Polsterelements derart gewählt werden, dass es eine gute Dämpfung aufweist, d.h. möglichst weich und für den Benutzer angenehm ausgestaltet ist. Das innere Polsterelement kann sodann etwas fester ausgebildet sein und vorzugsweise gute Rebound-Eigenschaften, d.h. gute Unterstützungseigenschaften aufweisen.

Erfindungsgemäß weist das innere Polsterelement Ansätze auf, die die Oberseite der Sattelschale berühren. Es handelt sich hierbei insbesondere um als Füße oder Stege ausgebildete Ansätze, so dass kein flächiges Berühren des inneren Polsterelements an der Oberseite der Sattelschale erfolgt, sondern nur die Ansätze die Sattelschale berühren. Dies hat den Vorteil, dass in den Bereichen zwischen dem äußeren Polsterelement und der Oberseite der Sattelschale ein weiteres Polsterelement insbesondere aus einem anderen Material eingebracht werden kann. Insbesondere handelt es sich hierbei um dasselbe Material, aus dem das äußere Polsterelement hergestellt ist, wobei es insbesondere bevorzugt ist, dass es sich hierbei um aufgeschäumtes bzw. aufschäumbares Material handelt.

Bei einer besonders bevorzugten Ausführungsform weist das innere Polsterelement mindestens einen Halteansatz auf. Der Halteansatz ragt bei befestigtem inneren Polsterelement in zumindest eine Ausnehmung der Halteschale. Bei der Ausnehmung kann es sich insbesondere um zumindest eine Vertiefung in der Oberseite der Halteschale handeln. Der mindestens eine Halteansatz, der in die Vertiefung oder Ausnehmung ragt, dient zur Lagedefinition und ggf. auch zur Fixierung des inneren Polsterelements an der Sattelschale. Besonders bevorzugt ist es hierbei, dass die Ausnehmung als durchgehende Öffnung der Sattelschale ausgebildet ist. Hierdurch ist bereits die Herstellung der Sattelschale bzw. der Ausnehmung vereinfacht. Der mindestens eine Halteansatz ist bei dieser Ausführungsform vorzugsweise derart ausgebildet, dass er durch die Öffnung hindurch ragt. Dies hat den Vorteil, dass das Vorsehen eines inneren Polsterelements von außen bei Betrachten des Sattels von unten sichtbar ist. Des Weiteren ist eine derartige Ausgestaltung der Ausnehmung als durchgehende Öffnung vorteilhaft, da hierdurch der Halteansatz auf einfache Weise zum Fixieren des inneren Polsterelements genutzt werden kann.

Der Halteansatz ist insbesondere in seiner Formgestaltung und Abmessung derart ausgebildet, dass ein Eindrücken in die Öffnung mit einem gewissen Widerstand möglich ist, so dass beispielsweise aufgrund einer Verformung des Halteansatzes und/oder der Reibung zwischen Halteansatz und Öffnungsrand ein Fixieren des inneren Polsterelements mit Hilfe des Halteansatzes in der Öffnung möglich ist. Vorzugsweise weist der Halteansatz mindestens einen Fortsatz, der beispielsweise wulstartig ausgebildet sein kann, auf. Der mindestens ein Fortsatz dient zur Fixierung des inneren Polsterelements an der Sattelschale bzw. in der Öffnung in der Sattelschale. Insbesondere ist der mindestens ein Fortsatz derart ausgebildet, dass in eingedrücktem bzw. montiertem Zustand der Fortsatz eine Unterseite der Sattelschale hintergreift. Der Fortsatz ist somit etwas größer als die Öffnung in diesem Bereich. Insbesondere kann der Fortsatz auch ringförmig ausgebildet sein, so dass eine sehr gute Fixierung des inneren Polsterelements an der Sattelschale durch ein Drücken des Halteansatzes in die Öffnung möglich ist.

In bevorzugter Ausgestaltung des Fahrradsattels ist das mindestens eine Polsterelement im Sitzbereich, d.h. im hinteren Bereich des Fahrradsattels angeordnet. Hierbei handelt es sich um den Bereich, in dem der Benutzer auf dem Sattel sitzt und in dem insbesondere die Sitzknochen angeordnet sind. Ebenso kann das innere Polsterelement oder ein weiteres inneres Polsterelement im Mittelbereich bzw. im Dammbereich des Fahrradsattels angeordnet sein.

Das innere Polsterelement ist in besonders bevorzugter Ausführungsform vollständig von dem äußeren, insbesondere durch Aufschäumen hergestellten Polsterelement umgeben. Hierbei ist es bevorzugt, dass eine Unterseite des inneren Polsterelements nicht oder nur teilweise vom äußeren Polsterelement umgeben ist, da diese Seite des inneren Polsterelements in bevorzugter Ausführungsform an der Oberseite der Sattelschale anliegt.

In besonders bevorzugter Ausführungsform ist das innere Polsterelement bzw. das Hauptpolsterelement als Elastomerkörper ausgebildet. Insbesondere weist der Elastomerkörper thermoplastische Elastomere (EPE) auf. Bevorzugt ist die Verwendung von Schäumen, wie PU-Schäume. Insbesondere sind geschlossenporige Schäume bevorzugt. Besonders bevorzugt weist das innere Polsterelement bzw. das Hauptpolsterelement TPU (thermoplastisches Polyurethan) auf und ist besonders bevorzugt aus diesem Material hergestellt. Besonders geeignet ist hierfür das von der Firma BASF unter dem Produktnamen "Infinergy" hergestellte Material. Verfahren zur Herstellung von TPU sind beispielsweise in EP 692510, WO 00/44821, EP 1174459 und EP 1174458 beschrieben. Ferner ist es bevorzugt, das innere Polsterelement bzw. das Hauptpolsterelement aus EVA (Ethylenvinylacetat) herzustellen, oder das Hauptpolsterelement aus Material herzustellen, das EVA aufweist. Ferner sind als Materialien EPP (expandiertes Polypropylen), TPE (thermoplastisches Elastomer) und EPE (expandiertes Polyethylen) verwendbar. Auch eine Kombination dieser Materialien miteinander oder eine Kombination der Materialien mit anderen Materialien ist möglich, zum Beispiel in einem Mehrschichtaufbau. Insbesondere können auch Mischungen mit Co- oder Terpolymeren eingesetzt werden. Hierdurch können unterschiedliche Dämpfungs- und Bewegungseigenschaften des Elastomer-körpers erzielt werden. Auch ist es möglich, die entsprechenden Materialien in unterschiedlichen Bereichen stärker zu verdichten, so dass hierdurch die Dämpfungs- und Bewegungseigenschaften beeinflusst werden können.

Des Weiteren ist als Material für den Elastomerkörper ein thermoplastischer elastomerer Kugelschaum geeignet. Ein derartiger Schaum wird von der Firma Sekisui unter dem Produktnamen "ELASTIL" angeboten. Dabei handelt es sich insbesondere um einen geschlossenzelligen Schaum. In bevorzugter Ausführungsform weist der Elastomerkörper erfindungsgemäß einen thermoplastischen elastomeren Kugelschaum wie insbesondere Elastil auf oder ist aus diesem hergestellt. Möglich ist auch eine Kombination mit den anderen beschriebenen, für die Ausbildung des Elastomerkörpers geeigneten Materialien.

Ein weiteres gut geeignetes Material zur Ausbildung des Elastomerkörpers ist ein Polyester-basiertes PU-Material. Besonders geeignet ist hierbei das von der Firma BASF unter dem Markennamen "Elastopan" angebotene Material. Vorzugsweise weist der Elastomerkörper ein derartiges Material auf oder ist aus diesem hergestellt, wobei es wiederum möglich ist, dieses Material mit anderen beschriebenen Materialien zu kombinieren.

Besonders bevorzugt ist es, dass der Elastomerkörper einen oder mehrere Partikelschäume aufweist und insbesondere aus einem oder mehreren Partikelschäumen hergestellt ist. Als Grundmaterial sind hierbei E-PTU, EPP, EPS, EPE oder ähnliche Schäume besonders bevorzugt. Partikelschäume bestehen hierbei in der Regel aus kleinen Kügelchen des expandierten Grundmaterials. Diese als Kügelchen oder andere Körper geformten Partikel werden in einem Werkzeug wie einer Form oder dergleichen unter Temperatur, ggf. auch unter Wasserdampf in ihre Endform gebracht. Partikelschäume haben insbesondere den Vorteil, dass sie eine geringe Dichte, eine gute Wärme-/Kälteisolation und gute Dämpfungseigenschaften aufweisen.

Der Elastomerkörper, d. h. das innere Polsterelement bzw. das Hauptpolsterelement weist in besonders bevorzugter Ausführungsform ein Elastizitätsmodul von 0,1 bis 10 MPA, insbesondere 0,1 bis 5 MPA und besonders bevorzugt 0,1 bis 1,0 MPA auf. Das besonders bevorzugte Material "Infinergy E-TPU" weist ein Elastizitätsmodul von 0,1 bis 0,5 MPA auf.

Des Weiteren ist es besonders bevorzugt, dass der Elastomerkörper aufgrund seiner geringen Dichte ein geringes Gewicht aufweist. Insbesondere weist der Elastomerkörper eine Dichte von weniger als 1 g/cm³, besonders bevorzugt weniger als 0,5 g/cm³, und insbesondere weniger als 0,2 g/cm³ auf. Eines der besonders bevorzugten Materialien, das Material Elastil, weist eine Dichte im Bereich von 0,05 bis 0,2 g/cm³ auf.

Das Rebound-Verhalten des inneren Polsterelements bzw. des Hauptpolsterelements liegt vorzugsweise im Bereich von mehr als 30%, insbesondere mehr als 40% und besonders bevorzugt mehr als 50%.

Das äußere Polsterelement bzw. das Zusatzpolsterelement ist vorzugsweise aus einem schäumbaren Material, insbesondere geschäumtem Kunststoff hergestellt. Besonders geeignet ist PU-Schaum.

Die Sattelschale weist als Material vorzugsweise PP, PA6 oder PA12 auf oder ist aus diesem Material hergestellt. Das Elastizitätsmodul der Sattelschale liegt erfindungsgemäß im Bereich von 1000 bis 10000 MPA, vorzugsweise im Bereich von 2500 bis 6000 MPA und besonders bevorzugt im Bereich von 3000 bis 5000 MPA. Bevorzugt ist die Verwendung von PP (E-Modul: 1100 bis 1450 MPA), PP GF20 (E-Modul ca. 2900 MPA) und/oder PA 6 GF15 (E-Modul 4500 bis 6500 MPA).

Ferner betrifft die Erfindung einen Fahrradsattel mit einem derartigen Sattelpolster.

Die Verwendung von TPU als Polstermaterial hat grundsätzlich den Nachteil, dass das Material aus einer Vielzahl von kugelähnlichen bzw. sphärischen Gebilden hergestellt ist. Insofern ist die Oberfläche des Materials relativ rau bzw. uneben. Durch Umgeben, insbesondere Umschäumen des TPU mit einem aufschäumbaren Material, können diese Unebenheiten ausgeglichen werden.

Auch kann durch Vorsehen eines entsprechenden äußeren Materials und/oder eines Sattelüberzugs eine Oberfläche mit geringerer Reibung hergestellt werden.

Nachfolgend werden die Erfindungen anhand bevorzugter Ausführungsformen unter Bezugnahme auf die Figur 3 und anliegenden Zeichnungen näher erläutert, wobei die Figuren 1, 2, 4 und 5 nicht beanspruchte Ausführungsformen zeigen.

Es zeigen:
- Fig. 1: eine schematische Draufsicht einer ersten Ausführungsform eines Fahrradsattels,
- Fig. 2: eine schematische Schnittansicht entlang der Linie II-II in Fig. 1, wobei Fig. 2 keine erfindungsgemäße Ausführungsform zeigt,
- Fig. 3: eine schematische Schnittansicht entlang der Linie II-II einer erfindungsgemäßen Ausführungsform,
- Fig. 4: eine schematische Draufsicht einer weiteren Ausführungsform eines Fahrradsattels, und
- Fig. 5: eine schematische Schnittansicht entlang der Linie V-V in Fig. 4.

In den nachstehend beschriebenen, unterschiedlichen Ausführungsformen der Erfindungen sind ähnliche und identische Bauteile jeweils mit denselben Bezugszeichen gekennzeichnet.

Die dargestellten Fahrradsättel weisen jeweils eine Sattelschale 10 auf. Mit einer Unterseite 12 der Sattelschale 10 ist ein Sattelgestell 14 verbunden.

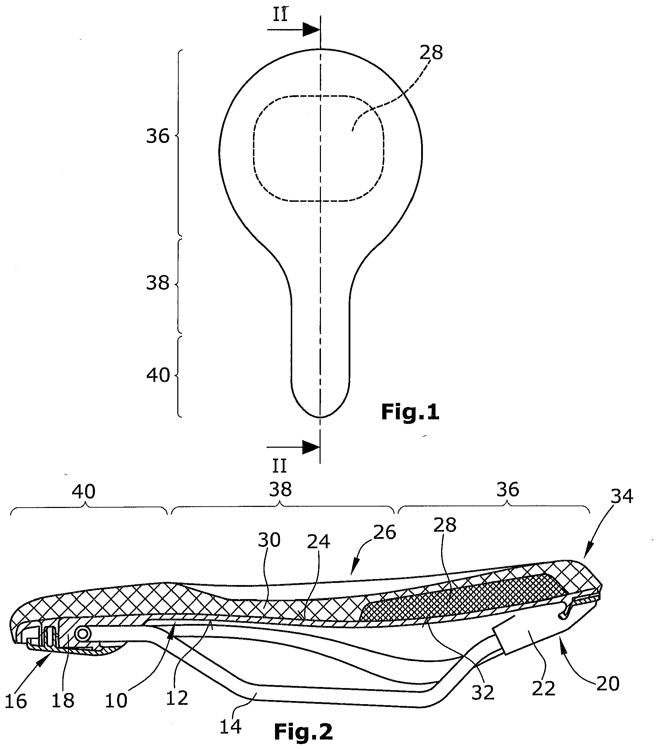

Hierbei ist das Sattelgestell 14 insbesondere durch zwei Metallstreben ausgebildet, von denen in Schnittansichten (Figuren 2, 3, 5 und 7) jeweils die hintere Strebe sichtbar ist. Im Bereich einer Sattelspitze 16 sind die beiden Streben in einem Ansatz 18 der Sattelschale 10 fixiert. Im Bereich einer Rückseite 20 des Sattels sind die beiden Streben des Gestells 14 jeweils getrennt voneinander in einem Ansatz 22 der Sattelschale 10 fixiert.

Auf einer Oberseite 24 der Sattelschale 10 ist ein Sattelpolster 26 angeordnet, das in den unterschiedlichen Ausführungsbeispielen unterschiedlich aufgebaut ist.

In der ersten Ausführungsform (Figuren 1 und 2) weist das Sattelpolster 26 ein inneres Polsterelement 28 sowie ein das innere Polsterelement 28 im Wesentlichen vollständig umgebendes äußeres Polsterelement 30 auf. Das innere Polsterelement 28 ist vorzugsweise aus TPU und das äußere Polsterelement 30 aus einem PU-Schaum hergestellt. Das innere Polsterelement 28 liegt mit einer ebenen Unterseite 32 an der Oberseite 24 der Sattelschale 10 an. Gegebenenfalls ist das innere Polsterelement 28 durch Verkleben mit der Oberseite 24 der Sattelschale 10 verbunden. Der PU-Schaum dient zur Erzeugung des äußeren Polsterelements 30, das mit Ausnahme der Unterseite 32 die übrigen Seiten des inneren Polsterelements 28 umgibt. Gegebenenfalls kann das innere Polsterelement 28 auch derart angeordnet sein, dass das äußere Polsterelement 30 dieses beispielsweise im Bereich einer Rückseite 34 nicht umgibt, so dass das innere Polsterelement in diesem Bereich sichtbar ist.

In dem in den Figuren 1 und 2 dargestellten Ausführungsbeispiel ist das innere Polsterelement 28 in einem Sitzbereich 36 des Sattels angeordnet. An den Sitzbereich 36 schließen ein Mittelbereich 38 sowie eine Sattelspitze 40 an. Sowohl im Mittelbereich 38 als auch im Bereich der Sattelspitze 40 ist in diesem Ausführungsbeispiel ausschließlich ein Sattelpolster aus PU-Schaum angeordnet, so dass in diesem Bereich ausschließlich das äußere Polster 30 vorgesehen ist.

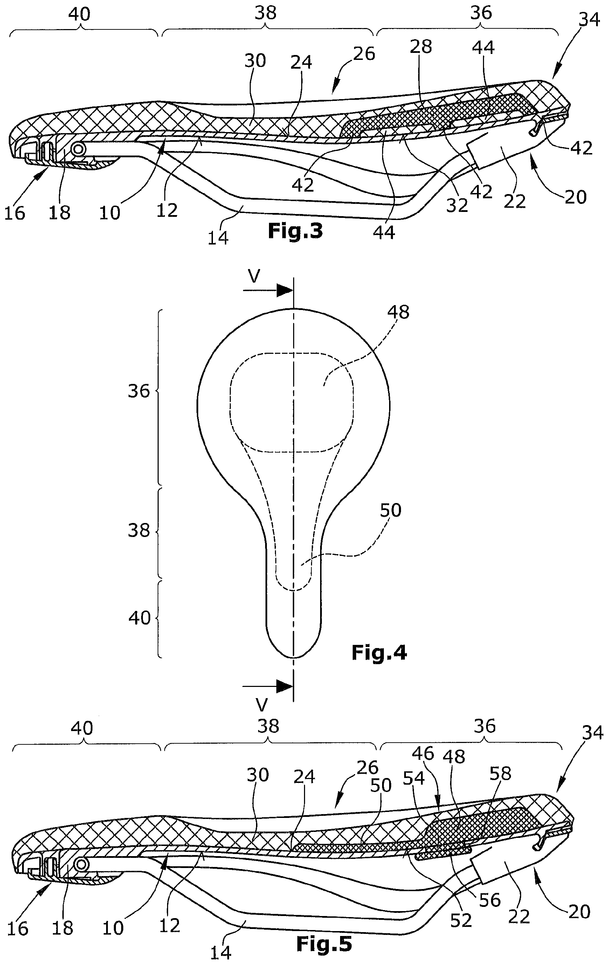

Bei einer erfindungsgemäßen Ausführungsform (Figur 3) ist das innere Polsterelement 28 derart ausgebildet, dass es in Richtung der Oberseite 24 der Sattelschale 10 weisende Ansätze bzw. Füße 42 aufweist. Ein derart ausgebildetes inneres Polsterelement 28 ist insbesondere über die Füße 42 mit der Oberseite 24 der Sattelschale 10 verbunden, beispielsweise verklebt. Durch das Vorsehen der Füße ist es möglich, unterhalb des inneren Polsterelements 28 Bereiche 44 auszugestalten. Diese können als Hohlräume ausgestaltet sein oder ebenfalls mit dem Schaum im Material des äußeren Sattelelements 30 gefüllt sein.

Durch die in Figur 3 dargestellte Ausführungsform können die Dämpfungs- und Rebound-Eigenschaften des Sattels im Sitzbereich 36 variiert werden.

Das in Figur 3 dargestellte innere Polsterelement 28 kann in einer alternativen Ausführungsform ebenfalls einen Ansatz 29 entsprechend der in Figur 2a dargestellten Ausführungsform aufweisen.

Das innere Polsterelement kann auch, wie in Figur 5 dargestellt, als inneres Polsterelement 46 ausgebildet sein oder eine andere Form aufweisen. Das innere Polsterelement 46 ist im Sitzbereich 36 ähnlich ausgestaltet wie das in Figur 2 dargestellte innere Polsterelement 28. Zusätzlich ist bei dem inneren Polsterelement 46 mit dem im Sitzbereich angeordneten Teil 48 ein im Mittelbereich 38 vorgesehenes Teil 50 des inneren Polsterelements 46 vorgesehen. Die beiden Teile 48, 50 des inneren Polsterelements 46 sind einstückig ausgebildet. Der Teil 50 des inneren Polsterelements 46 ist hierbei dünner bzw. weist eine geringere Höhe als der im Sitzbereich 36 angeordnete Teil 48 auf.

An einer Unterseite 52 des inneren Polsterelements 46 ist ein Halteansatz 54 angeordnet. Der Halteansatz 54 ist mit einem im dargestellten Ausführungsbeispiel als Wulst ausgebildeten Fortsatz 56 verbunden. Im dargestellten Ausführungsbeispiel ist der Halteansatz 54 zylindrisch ausgebildet und der Fortsatz 56 als Ringwulst ausgebildet. In der Sattelschale 10 ist eine Ausnehmung bzw. Öffnung 58 angeordnet, die im dargestellten Ausführungsbeispiel durchgehend ist. Zur Fixierung des inneren Polsterelements 46 ist es daher möglich, den Halteansatz 54 zusammen mit der Wulst 56 durch die Öffnung 58 in Figur 5 von oben einzudrücken. Durch die Wulst 56, die eine größere Abmessung als die Öffnung 58 aufweist, ist ein sicheres Halten des inneren Polsterelements 46 erzielt.

Zur Herstellung der in den Figuren 1 bis 5 dargestellten oder vorstehend beschriebenen Fahrradsättel wird in einem ersten Schritt das entsprechende innere Polsterelement 28 bzw. 46 in einer entsprechenden Form hergestellt. Das innere Polsterelement 28, 46 ist hierbei vorzugsweise aus TPU und insbesondere dem von der Firma BASF unter dem Markennamen "Infinergy" vertriebenen Material. Im nächsten Schritt wird das innere Polsterelement 28, 46 mit der Oberseite 24 der Sattelschale 10 verbunden bzw. an dieser fixiert. Dies erfolgt bei den in Figur 1 bis 3 dargestellten Ausführungsformen beispielsweise durch Verkleben. Bei der in Figur 4 und 5 dargestellten Ausführungsform erfolgt das Verbinden durch Eindrücken des Halteansatzes 54 in die Öffnung 58. Im nächsten Schritt wird die Sattelschale zusammen mit dem daran befestigten inneren Polsterelement 28, 46 und zusammen mit dem an der Außenseite vorgesehenen Gestell 14 in eine Gussform gelegt. Hierbei erfolgt das Einlegen in die Gussform derart, dass das Sattelgestell nach oben weist. Anschließend wird in die Gussform das Material zur Herstellung des äußeren Polsterelements 30 eingefüllt und aufgeschäumt. Aufgrund des Einlegens des Sattels in die Gussform mit nach oben weisendem Sattelgestell ist das Einfüllen des Materials für das äußere Polsterelement 30 auf einfache Weise möglich. Durch ein Fixieren des inneren Polsterelements 28, 46 an der Sattelschale 10 ist sichergestellt, dass dieses mit der Oberseite 24 der Sattelschale 10 in Kontakt bleibt.

Gegebenenfalls kann vor dem Einlegen der Sattelschale in die Gussform, diese mit einem Sattelüberzug ausgelegt werden. Der Sattelüberzug wird in der Gussform vorzugsweise durch Unterdruck fixiert, so dass eine glatte Oberseite realisiert ist.

Alternativ können in sämtlichen vorstehend beschriebenen Ausführungsformen die Sitzpolster 26 auch unabhängig von der Sattelschale hergestellt werden. Die entsprechenden Sitzpolster, die mindestens zwei unterschiedliche Polsterelemente aufweisen, können sodann auf die Oberseite 24 der Sattelschale 10 beispielsweise aufgeklebt werden.

## Patentansprüche

1. Fahrradsattel, mit einer Sattelschale (10),
einem mit einer Unterseite (12) der Sattelschale (10) verbundenen Sattelgestell (14) und
einem an einer Oberseite (24) der Sattelschale (10) angeordneten Sattelpolster (26), wobei das Sattelpolster (26) mindestens zwei Polsterelemente (28, 30; 46, 30) aufweist,
wobei ein inneres Polsterelement (28) von einem äußeren Polsterelement (30) zumindest teilweise umgeben, insbesondere umspritzt, bzw. umschäumt ist,
wobei das innere Polsterelement (28) Ansätze (42) aufweist, die die Oberseite (24) der Sattelschale (10) berühren, so dass unterhalb des inneren Polsterelements (28) Bereiche (44) ausgestaltet sind, **dadurch gekennzeichnet, dass** die Bereiche als Hohlräume ausgebildet sind oder mit dem Material des äußeren Polsterelements (30) gefüllt sind.

2. Fahrradsattel nach Anspruch 1, **dadurch gekennzeichnet, dass** das innere Polsterelement (28) an der Oberseite (24) der Sattelschale (10) angeordnet, insbesondere mit der Oberseite (24) verbunden ist.

3. Fahrradsattel nach Anspruche 1 oder 2, **dadurch gekennzeichnet, dass** das innere Polsterelement (28) in einem Sitzbereich (36) des Fahrradsattels angeordnet ist.

4. Fahrradsattel nach einem der Ansprüche 1 bis 3, **dadurch gekennzeichnet, dass** das innere Polsterelement (28) vollständig von dem äußeren Polsterelement (30) und der Sattelschale (10) umgeben ist.

5. Fahrradsattel nach einem der Ansprüche 1 bis 4, **dadurch gekennzeichnet, dass** das innere Polsterelement (28) thermoplastisches Polyurethan, TPU, und/oder Etylenvinylacetat, EVA, und/oder expandiertes Polypropylen, EPP, und/oder thermoplastisches Elastomer, TPE, und/oder expandiertes Polyethylen, EPE, aufweist bzw. aus diesem Material oder Kombinationen der Materialien hergestellt ist.

6. Fahrradsattel nach einem der Ansprüche 1 bis 5, **dadurch gekennzeichnet, dass** das äußere Polsterelement (30) PU-Schaum aufweist, insbesondere aus PU-Schaum hergestellt ist.

## Claims

1. A bicycle saddle, comprising a saddle shell (10),
a saddle frame (14) connected with a lower side (12) of the saddle shell (10), and
a saddle pad (26) arranged on an upper side (24) of the saddle shell (10), the saddle pad (26) comprising at least two pad elements (28, 30; 46, 30), wherein an inner pad element (28) is at least partially surrounded by an outer pad element (30), in particular is overmolded or foamed, respectively,
wherein the inner pad element (28) has lugs (42) contacting the upper side (24) of the saddle shell (10) such that regions (44) are formed below the inner pad element (28),
**characterized in that**
the region are formed as cavities or are filled with the material of the outer pad element (30).

2. The bicycle saddle according to claim 1, **characterized in that** the inner pad element (28) is arranged on the upper side (24) of the saddle shell (10), in particular is connected to the upper side (24).

3. The bicycle saddle according to claim 1 or 2, **characterized in that** the inner pad element (28) is arranged in a seat region (36) of the bicycle saddle.

4. The bicycle saddle according to any one of claims 1 to 3, **characterized in that** the inner pad element (28) is entirely surrounded by the outer pad element (30) and the saddle shell (10).

5. The bicycle saddle according to any one of claims 1 to 4, **characterized in that** the inner pad element (28) comprises thermoplastic polyurethane, TPU, and/or ethylene vinyl acetate, EVA, and/or expanded polypropylene, EPP, and/or thermoplastic elastomer, TPE, and/or expanded polyethylene, EPE, or is made of said material or combinations of said materials, respectively.

6. The bicycle saddle according to any one of claims 1 to 5, **characterized in that** the outer pad element (30) comprises PU foam, in particular is made of PU foam.

## Revendications

1. Selle de bicyclette, comprenant une coque de selle (10),
un châssis de selle (14) relié à une face inférieure (12) de la coque de selle (10), et
un coussin de selle (26) disposé sur une face supérieure (24) de la coque de selle (10), le coussin de selle (26) comportant au moins deux éléments de coussin (28, 30 ; 46, 30),
un élément de coussin intérieur (28) étant, au moins partiellement, entouré d'un élément de coussin extérieur (30), en particulier enrobé par injection ou par moussage,
l'élément de coussin intérieur (28) comportant des saillies (42) qui sont en contact avec la face supérieure (24) de la coque de selle (10), de manière à former des régions (44) au-dessous de l'élément de coussin intérieur (28),
**caractérisée en ce que** les régions sont configurées sous forme de cavités ou sont remplies du matériau de l'élément de coussin extérieur (30).

2. Selle de bicyclette selon la revendication 1, **caractérisée en ce que** l'élément de coussin intérieur (28) est disposé à la face supérieure (24) de la coque de selle (10), en particulier est relié à la face supérieure (24).

3. Selle de bicyclette selon la revendication 1 ou 2, **caractérisée en ce que** l'élément de coussin intérieur (28) est disposé dans une région d'assise (36) de la selle de bicyclette.

4. Selle de bicyclette selon l'une des revendications 1 à 3, **caractérisée en ce que** l'élément de coussin intérieur (28) est complètement entouré de l'élément de coussin extérieur (30) et de la coque de selle (10).

5. Selle de bicyclette selon l'une des revendications 1 à 4, **caractérisée en ce que** l'élément de coussin intérieur (28) comprend du polyuréthane thermoplastique, TPU, et/ou de l'éthylène-acétate de vinyle, EVA, et/ou du polypropylène expansé, EPP, et/ou de l'élastomère thermoplastique, TPE, et/ou du polyéthylène expansé, EPE, ou bien est réalisé dans ce matériau ou des combinaisons des matériaux.

6. Selle de bicyclette selon l'une des revendications 1 à 5, **caractérisée en ce que** l'élément de coussin extérieur (30) comporte de la mousse de polyuréthane, en particulier est réalisé en mousse de polyuréthane.
